# EUROPEAN PATENT APPLICATION

(11) **EP 1 160 704 A2**
(43) Date of publication of application: **05.12.2001**
(21) Application number: 01112622.4
(22) Date of filing: 23.05.2001
(51) Int. Cl.: G06F 17/60

(54) **E-mail processing system, processing method and processing device**

(30) Priority: 26.05.2000 JP 2000156057
(71) Applicant: NEC Corporation, Minato-ku, Tokyo 108-01 (JP)
(72) Inventor: Kosuge, Satoru, Minato-ku, Tokyo (JP)
(74) Representative: von Samson-Himmelstjerna, Friedrich R., Dipl.-Phys.

(57) **Abstract**

An e-mail processing system, processing method and processing device includes a provider connected to personal computers (PCs) and a portable telephone or a PHS or a PDA via Internet. In the provider, the content of a received e-mail is compressed by a keyword analysis to obtain a short text of the e-mail, and the short text is sent from the provider to the e-mail receiver via the Internet. The e-mail receiver receives and displays the short text to immediately understand the content of the received e-mail. The whole short text can be displayed on a small screen of the portable telephone (PHS) or the PDA without scrolling the displayed e-mail. The provider can rearrange the received e-mail in order of receiver's priority and send the rearranged e-mail to the e-mail receiver via the Internet. The receiver can receive and read in his optimum order with ease of use, and the e-mail requiring an urgent action can be preferentially displayed. The provider can convert the e-mail text document into voiced e-mail and sends the voiced e-mail to the receiver via the public telephone network. The e-mail receiver can listen to the voiced e-mail using the telephone such as the portable telephone (PHS) without using the PC or the PDA.

## Description

### BACKGROUND OF THE INVENTION

The present invention relates to an e-mail processing system, processing method and processing device and more particularly to an e-mail processing system, processing method and processing device, which processes data of e-mails to be sent or received via Internet.

### Prior art

Recent years, to send and receive e-mail (electronic mail) using an information device such as a personal computer has been rapidly popularized irrespective of corporations, organizations and individuals with the spread of Internet. When sending and receiving e-mail, an e-mail sender composes e-mail text using a keyboard of an information processing terminal such as a personal computer, a portable telephone, a PHS (personal handy phone system), a PDA (personal digital assistance) having a communication device or the like, makes access to an Internet service provider and sends the composed e-mail to the Internet service provider.

An e-mail receiver gets access to the Internet service provider using an information processing terminal, checks out whether or not, e-mail has reached own address and receives the e-mail from the Internet service provider when the e-mail has reached. The received e-mail is displayed on a screen of the information processing terminal of the e-mail receiver.

In a conventional e-mail processing system, the content of the received e-mail is displayed as it is on the screen of the information processing terminal and it takes longer time to confirm or understand its content as the text of the received e-mail becomes long. Further, in the portable telephone, the PHS or the like, the screen for displaying the received e-mail is small and, when the text of the received e-mail is long, a scroll is required with the result of a problem in operability.

In the portable personal computer, the PDA or the like having the communication function, a certain measure of knowledge and experience are required for the setting and actual use of the e-mail and thus the e-mail cannot be readily used. Further, in the portable telephone or the PHS, it is necessary to use a keyboard for composing an answer mail in response to the e-mail (character mail service) and hence it takes time to compose a longer text than a certain extent of length.

Furthermore, since e-mails are usually stored in order of the received time, for many received e-mails, even when there is any e-mail requiring an urgent action, the e-mail receiver must read the e-mails in the received order, which is inconvenient in ease of use. Further, in the case of a user having both a personal computer and a portable telephone or a PHS, a Japanese kana-kanji conversion processor such as an input method editor (IME) or Japanese input front end processor for use in a telephone book management and composing e-mail, and other system programs are imcompatible between the personal computer and the portable telephone or the PHS and thus inconvenience arises in using the same.

### SUMMARY OF THE INVENTION

It is therefore an object of the present invention to provide an e-mail processing system, processing method and processing device in view of the aforementioned problems of the prior art, which is capable of confirming content of received e-mail immediately.

It is another object of the present invention to provide an e-mail processing system, processing method and processing device, which is capable of confirming e-mail in order of precedence.

It is a further object of the present invention to provide an e-mail processing system, processing method and processing device, which is capable of receiving e-mail by voice using a portable telephone or a PHS without using a personal computer or a PDA having a communication device.

In accordance with one aspect of the present invention, there is provided an electronic mail processing system comprising: first sending means for sending electronic mail to a receiver via internet; analysis means for receiving the electronic mail sent from the first sending means via the internet and for carrying out a keyword analysis of the received electronic mail on the basis of keywords previously registered by the receiver to obtain a short text of the electronic mail; storing means for storing the short text of the electronic mail obtained after the keyword analysis; and second sending means for sending the short text of the electronic mail stored in the storing means to the receiver via the internet in response to access of the receiver.

In the electronic mail processing system of the present invention, the content of the received electronic mail is compressed by a keyword analysis to obtain a short text of the electronic mail in the provider. The short text is sent to the receiver via the Internet, and the receiver displays the short text and can immediately understand its content.

In an electronic mail processing system of the present invention, the keywords are individual keywords including dates, place names, proper names and individually set particular terms, and group keywords including an occupation, an occupational type and an age group of an electronic mail sender and receiver.

An electronic mail processing system of the present invention further comprises rearrange means for receiving the electronic mail sent from the first sending means via the internet and for rearranging the received electronic mail in a priority order previously registered by the receiver; and second storing means for storing the received electronic mail rearranged by the rearrange means, and the analysis means carries out the keyword analysis of the received electronic mail stored in the second storing means on the basis of the keywords previously registered by the receiver to obtain the short text of the electronic mail.

In accordance with another aspect of the present invention, there is provided an electronic mail processing system comprising: first sending means for sending electronic mail to a receiver via internet; rearrange means for receiving the electronic mail sent from the first sending means via the internet and for rearranging the received electronic mail in a priority order previously registered by the receiver; storing means for storing the received electronic mail rearranged by the rearrange means; and second sending means for consecutively sending the received electronic mail stored in the storing means in the stored order to the receiver via the internet in response to access of the receiver.

In an electronic mail processing system of the present invention, the received electronic mail is rearranged in a predetermined priority order and the rearranged electronic mail is sent to the receiver via the Internet. Hence, when receiving a lot of electronic mail, the receiver can read in his own priority order.

In accordance with another aspect of the present invention, there is provided an electronic mail processing system comprising: first sending means for sending electronic mail to a receiver via internet; voice conversion means for receiving the electronic mail sent from the first sending means via the internet and for converting content of the received electronic mail into voice signals; reading out means for reading out the voice signals output from the voice conversion means to I produce voiced electronic mail; and second sending means for sending the voiced electronic mail produced by the reading out means to the receiver via a public telephone network in response to access of the receiver.

In an electronic mail processing system of the present invention, the electronic mail received via the Internet is converted into voiced electronic mail and the voiced electronic mail is sent to the receiver via the public telephone network. Thus, the receiver can listen to the electronic mail by voice.

An electronic mail processing system of the present invention further comprises document output means for selecting one of reply repetitive documents previously registered by the receiver and outputting the selected reply repetitive document in response to a signal sent from the receiver via the public telephone network; and reply sending means for preparing electronic mail from the reply repetitive document output from the document output means and for sending the prepared electronic mail to the electronic mail sender via the internet.

In the electronic mail processing system of the present invention, the reply of the electronic mail can be sent back to the electronic mail sender using the simple repetitive document. Further, the text can be produced from the voiced electronic mail and can be sent in the text form to the receiver via the internet.

In accordance with another aspect of the present invention, there is provided an electronic mail processing system of claim 6, further comprising: rearrange means for receiving the electronic mail sent from the first sending means via the internet and for rearranging the received electronic mail in a priority order previously registered by the receiver; and storing means for storing the received electronic mail rearranged by the rearrange means, and the voice conversion means converts the content of the received electronic mail stored in the storing means into the voice signals.

An electronic mail processing system of the present invention further comprises rearrange means for receiving the electronic mail sent from the first sending means via the internet and for rearranging the received electronic mail in a priority order previously registered by the receiver; first storing means for storing the received electronic mail rearranged by the rearrange means; analysis means for carrying out a keyword analysis of the received electronic mail stored in the first storing means on the basis of keywords previously registered by the receiver to obtain a short text of the electronic mail; and second storing means for storing the short text of the electronic mail obtained after the keyword analysis, and the voice conversion means converts the content of the received electronic mail stored in the second storing means into the voice signals.

In accordance with another aspect of the present invention, there is provided an electronic mail processing system comprising: first sending means for sending voiced electronic mail to a receiver via a public telephone network; conversion means for receiving the voiced electronic mail sent from the first sending means via the public telephone network and for converting content of the voiced electronic mail into a text as content of a communication matter; storing means for storing the voiced electronic mail of a destination text converted by the conversion means; and second sending means for sending the received electronic mail stored in the storing means to the receiver via the internet in response to access of the receiver of the voiced electronic mail.

In accordance with another aspect of the present invention, there is provided an electronic mail processing method, wherein a provider stores electronic mail sent to a receiver via internet in a receive mail box and sends the electronic mail stored in the receive mail box to the receiver via the internet in response to access made by the receiver via the internet, comprising the steps of: first step for carrying out a keyword analysis of the received electronic mail on the basis of keywords previously registered by the receiver to obtain a short text of the electronic mail; second step for storing the short text of the electronic mail after the keyword analysis in the receive mail box; and third step for sending the short text of the electronic mail stored in the receive mail box to the receiver via the internet in response to access of the receiver.

In the electronic mail processing method of the present invention, the content of the received electronic mail is compressed by a keyword analysis to obtain a short text of the electronic mail in the provider. The short text is sent to the receiver via the Internet, and the receiver displays the short text and can immediately understand its content.

In accordance with another aspect of the present invention, there is provided an electronic mail processing method, wherein a provider stores electronic mail sent to a receiver via internet in a receive mail box and sends the electronic mail stored in the receive mail box to the receiver via the internet in response to access made by the receiver via the internet, comprising the steps of: first step for rearranging the received electronic mail in a priority order previously registered by the receiver; second step for storing the received electronic mail rearranged in the first step in the receive mail box; and third step for consecutively sending the received electronic mail stored in the receive mail box in the stored order to the receiver via the internet in response to access of the receiver.

In an electronic mail processing method of the present invention, the received electronic mail is rearranged in a predetermined priority order and the rearranged electronic mail is sent to the receiver via the Internet. Hence, when receiving a lot of electronic mail, the receiver can read in his own priority order.

An electronic mail processing method of the present invention further comprises fourth step for carrying out a keyword analysis of the rearranged electronic mail stored in the receive mail box on the basis of keywords previously registered by the receiver to obtain a short text of the electronic mail; and fifth step for storing the short text of the electronic mail after the keyword analysis in the receive mail box, and the fourth and the fifth steps are carried out before the third step.

In accordance with another aspect of the present invention, there is provided an electronic mail processing method, wherein a provider stores electronic mail sent to a receiver via internet in a receive mail box and sends the electronic mail stored in the receive mail box to the receiver via the internet in response to access made by the receiver via the internet, comprising the steps of: first step for converting content of the received electronic mail into voice signals; second step for reading out the voice signals converted in the first step to produce voiced electronic mail; and third step for sending the voiced electronic mail produced in the second step to the receiver via a public telephone network in response to access of the receiver.

In an electronic mail processing method of the present invention, the electronic mail received via the Internet is converted into voiced electronic mail and the voiced electronic mail is sent to the receiver via the public telephone network. Thus, the receiver can listen to the electronic mail by voice.

In an electronic mail processing method of the present invention, the electronic mail to be converted into the voice signals in the first step is the short text of the received electronic mail obtained by carrying out a keyword analysis of the electronic mail on the basis of keywords previously registered by the receiver.

In an electronic mail processing method of the present invention, the electronic mail to be converted into the voice signals in the first step is the short text of the received electronic mail obtained by carrying out a keyword analysis of the electronic mail on the basis of keywords previously registered by the receiver and by rearranging the received electronic mail in a priority order previously registered by the receiver.

In accordance with another aspect of the present invention, there is provided an electronic mail processing device comprising: receive means for receiving electronic mail sent to a receiver 8via internet and for storing the received electronic mail in a receive mail box; analysis means for reading the electronic mail out of the receive mail box and for carrying out a keyword analysis of the readout electronic mail on the basis of keywords previously registered by the receiver to obtain a short text of the electronic mail; a key-worded receive mail box for storing the short text of the electronic mail obtained by the keyword analysis; and sending means for sending the short text of the electronic mail stored in the key-worded receive mail box to the receiver via the internet in response to access of the receiver.

In the electronic mail processing device of the present invention, the content of the received electronic mail is compressed by a keyword analysis to obtain a short text of the electronic mail in the provider. The short text is sent to the receiver via the Internet, and the receiver displays the short text and can immediately understand its content.

In accordance with another aspect of the present invention, there is provided an electronic mail processing device comprising: receive means for receiving electronic mail sent to a receiver via internet and for storing the received electronic mail in a receive mail box; rearrange means for reading the electronic mail out of the receive mail box, for rearranging the electronic mail in a priority order previously registered by the receiver and for storing again the electronic mail rearranged by the rearrange means in the receive mail box; and sending means for consecutively sending the rearranged electronic mail stored in the receive mail box in the stored order to the receiver via the internet in response to access of the receiver.

In an electronic mail processing device of the present invention, the received electronic mail is rearranged in a predetermined priority order and the rearranged electronic mail is sent to the receiver via the Internet. Hence, when receiving a lot of electronic mail, the receiver can read in his own priority order.

In accordance with another aspect of the present invention, there is provided an electronic mail processing device comprising: receive means for receiving electronic mail sent to a receiver via internet and for storing the received electronic mail in a receive mail box; mail conversion means for reading the electronic mail out of the receive mail box, for converting content of the received electronic mail into voice signals and for reading out the voice signals to produce voiced electronic mail; and sending means for sending the voiced electronic mail produced by mail conversion means to the receiver via a public telephone network in response to access of the receiver.

In an electronic mail processing device of the present invention, the electronic mail received via the Internet is converted into voiced electronic mail and the voiced electronic mail is sent to the receiver via the public telephone network. Thus, the receiver can listen to the electronic mail by voice.

In an electronic mail processing system of the present invention, at least one of a Japanese kana-kanji conversion processor and a Japanese language dictionary for use in at least composing electronic mail is shared between a personal computer and a portable information processing terminal, and at least one of the personal computer and the portable information processing terminal is used as the electronic mail sending means for sending the electronic mail via a wireless connection interface.

In the electronic mail processing system of the present invention, when the user uses both the personal computer and the portable information processing terminal such as the portable telephone, the PHS or the PDA, the user can compose the electronic mail in the same operation without feeling any disorder at all using either the personal computer or the portable telephone (PHS), movable phone or the PDA.

### BRIEF DESCRIPTION OF THE DRAWINGS

The objects, features and advantages of the present invention will become more apparent from the consideration of the following detailed description, taken in conjunction with the accompanying drawings, in which:
Fig. 1 is a schematic diagram showing an e-mail processing system according to a first embodiment of the present invention;
Fig. 2 is a flow chart showing an operation of the e-mail processing system shown in Fig. 1;
Fig. 3 is a schematic diagram showing an operation of a keyword analysis in a keyword analysis server shown in Fig. 1;
Fig. 4 is a schematic diagram showing an e-mail processing system according to a second embodiment of the present invention;
Fig. 5 is a schematic diagram showing an e-mail processing system according to a third embodiment of the present invention;
Fig. 6 is a flow chart showing an operation of the e-mail processing system shown in Fig. 5;
Fig. 7 is a schematic diagram showing an operation of a voice conversion in a voice conversion server and a reading out in a voice reading out server shown in Fig. 5;
Fig. 8 is a schematic diagram showing an e-mail processing system according to a fourth embodiment of the present invention; and
Fig. 9 is a flow chart showing an operation of sharing of subprogram or any language(s) conversion or translation processor such as an input method editor or other language dictionary in the e-mail processing system shown in Fig. 8.

### DESCRIPTION OF THE PREFERRED EMBODIMENTS

Embodiments of the present invention will be described in detail hereinafter by referring to attached drawings.

### First embodiment

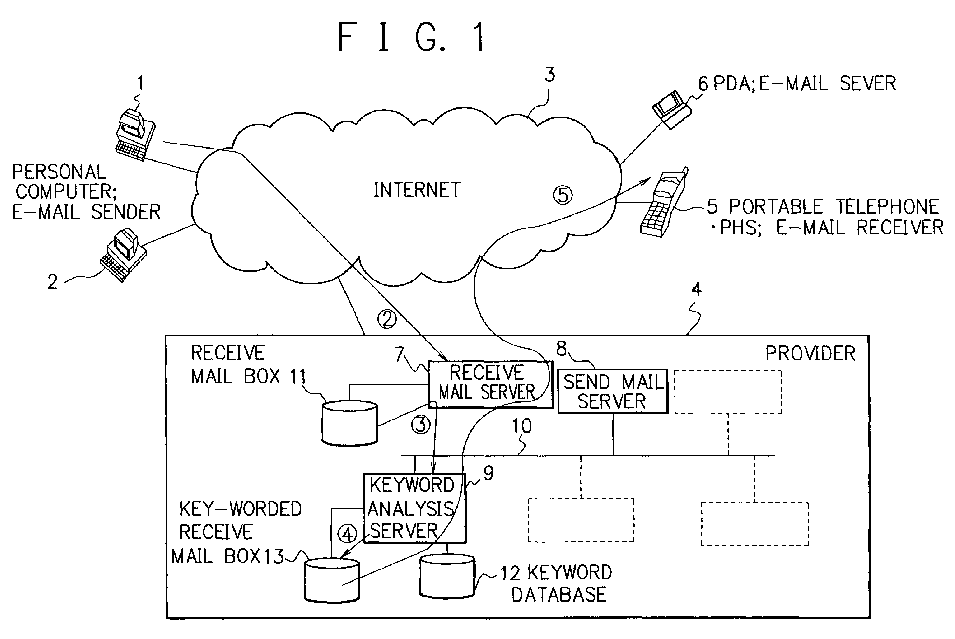

Fig. 1 is a schematic diagram showing an e-mail processing system according to a first embodiment of the present invention. As shown in Fig. 1, in an e-mail (electronic mail) processing system, desktop personal computers (PCs) 1 and 2 as e-mail senders, a provider 4 as an Internet service provider, a portable telephone (or a movable wireless phone, a PHS (personal handy phone system or the like)) 5 as an e-mail receiver, and a PDA (personal digital assistance) 6 having a communication device as an e-mail receiver are connected to Internet 3 as an Internet network.

The provider 4 includes a receive mail server 7, a send mail server 8 and a keyword analysis server 9, and these three members are connected to the Internet 3 via a LAN (local area network). The receive mail server 7 is coupled with a receive mail box 11, and the keyword analysis server 9 is linked to a keyword database 12 and a key-worded receive mail box 13.

### Operation

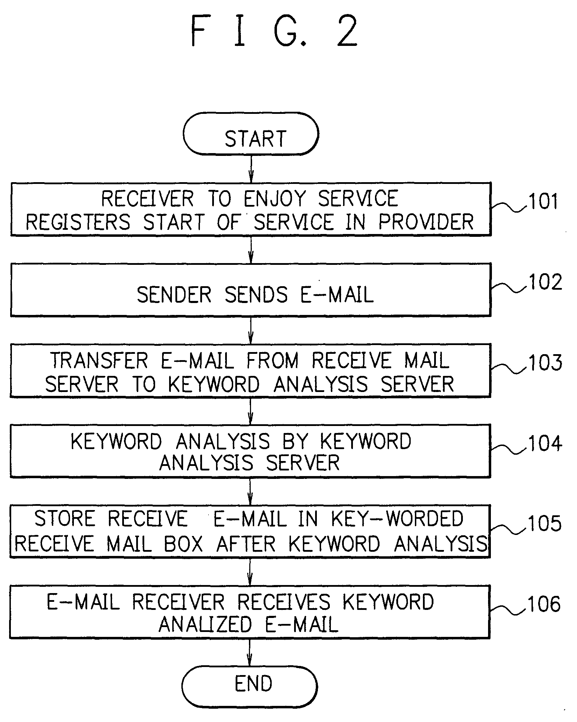

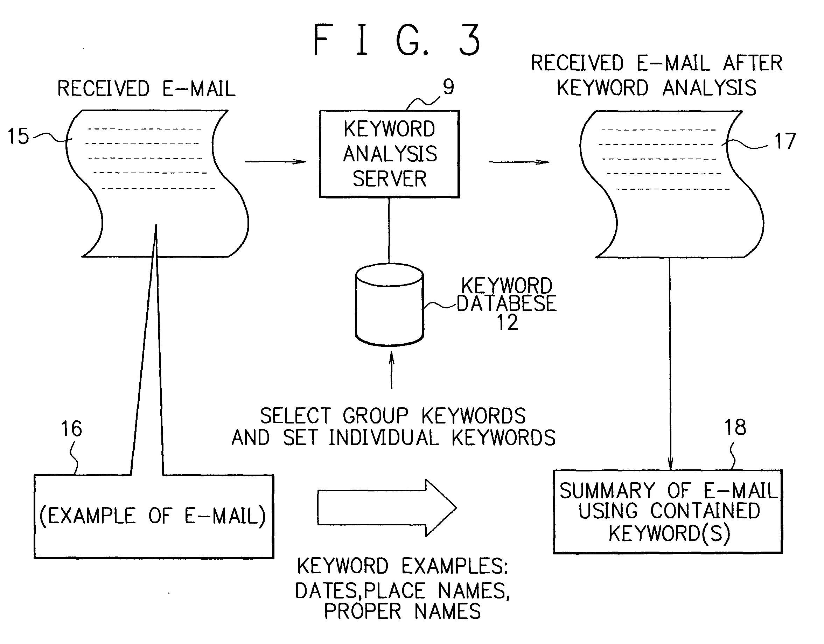

An operation of the e-mail processing system shown in Fig. 1 will be described with reference to Fig. 2 and Fig. 3. Fig. 2 is a flow chart showing an operation of the e-mail processing system described above. First, an e-mail receiver to enjoy service of the e-mail processing system previously registers a start of the service in the provider 4 in step 101. This register can be carried out on a Web by making access to the Internet 3 from the PC 1 or 2 or from the portable telephone (PHS) 5 or the PDA 6. On this occasion, the user can select group keywords of one of classified groups (student, housewife, company employee, business man/technician and the like) including an occupation, an occupational type and an age group, prepared by the provider 4 and also can set individual keywords including dates, place names, spots, proper names and individually set particular terms.

Then, an e-mail sender gets access to the provider 4 via the Internet 3 using the PC 1 or 2 and, as shown by ②in Fig. 1, sends e-mail to the intended recipient address in a conventional manner in step 102. In the provider 4, the sent e-mail is received by the receive mail server 7 and is once stored in the receive mail box 11. When this e-mail recipient or receiver is registered in the provider 4 as an eligible receiver to enjoy the service of the e-mail processing system, the e-mail is read out of the receive mail box 11 and, as shown by ③ in Fig. 1, is transferred to the keyword analysis server 9 in step 103.

The keyword analysis server 9 analyzes the keywords of the received e-mail in step 104. The keyword analysis will be described in detail with reference to Fig. 3 which shows an operation of a keyword analysis in the keyword analysis server 9. In Fig. 3, the content of the received e-mail 15 stored in the receive mail box 11 is, as shown by numeral 16, "As to the above-captioned case, we have studied the proposal of your company today and determined to accept your proposal. Therefore, we would like to consult with you about various conditions concerning the contract in our company from 2 p.m. on the third of the coming February and would like your qualified person to attend the consultation".

In this instance, the keyword analysis server 9 refers to the keyword database 12 storing predetermined group keywords and individual keywords and deletes some inessential words from the received e-mail while leaving the keywords, for example, dates, place names, spots, proper names and individually set particular terms such as "above-captioned case, have studied, your company, proposal, accept, contract, various conditions, qualified person, attend and so on" to prepare a short text 18. The keyword analysis server 9 then outputs the prepared short text 18 as a keyword analyzed e-mail 17.

As shown in Figs. 1 and 2, the keyword analysis server 9, as shown by · in Fig. 1, stores the keyword analyzed e-mail 17 into the key-worded receive mail box 13 in step 105. Thereafter, the e-mail receiver who has registered the service start in the provider 4 makes access to the provider 4 via the Internet using the portable telephone (PHS) 5 or the PDA 6 and receives the keyword analyzed e-mail 17 directed to his own address in step 106.

Since the received keyword analyzed e-mail 17 is the short text, as shown by numeral 18 in Fig. 3, the short text 18 can be entirely displayed on the small screen of the portable telephone (PHS) 5 or the PDA 6. However, if the text 16 of the original e-mail 15 is displayed as it is, the whole text cannot be displayed on the small screen of the portable telephone (PHS) 5 or the PDA 6. In addition, the keyword analyzed e-mail 17 is prepared on the basis of the keywords that the e-mail receiver registered, and thus the e-mail receiver can immediately understand the content of the short text of the received e-mail.

The whole of the e-mail received by the receive mail server 7 is stored in the receive mail box 11, and hence by making a request, the e-mail receiver can receive the entire e-mail in a conventional manner. Further, of course, the e-mail receiver can receive the e-mail using a usual personal computer. PHS, PDA or the like used the present embodiment has many functions as aforesaid, that is, scheduling, summarizing of e-mail, speech synthesizing of e-mail or summarized e-mail and calculating any unit transformation such as from pound to kilograms or the like by utilizing Internet, same as mentioned below. In PHS, PDA and so on, above function may be used in alone or in combination with 2 or more.

### Second embodiment

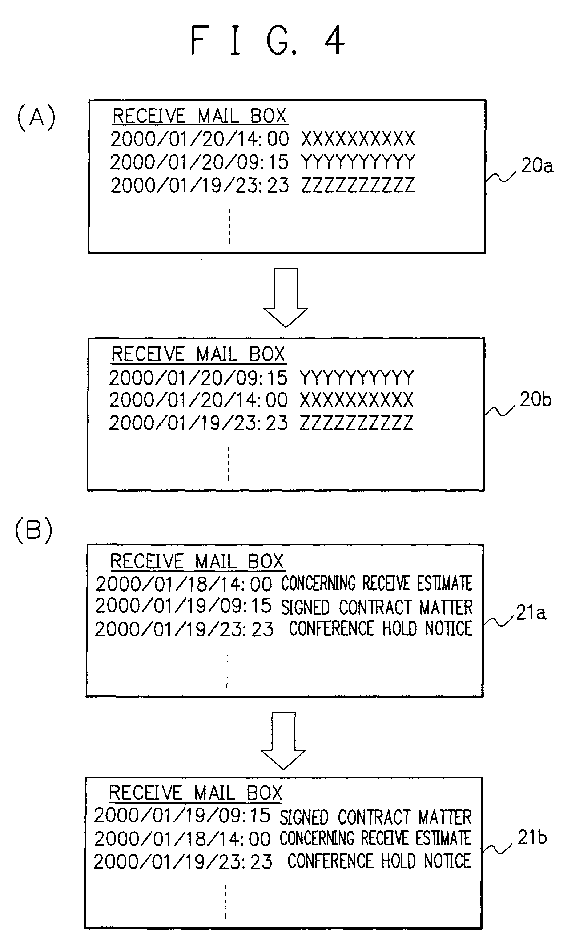

There is shown in Fig. 4 an e-mail processing system according to a second embodiment of the present invention. In this embodiment, the e-mail processing system has almost the same construction as that of the first embodiment shown in Fig. 1, and in place of the keyword analysis server 9, the keyword database 12 and the key-worded receive mail box 13 of the first embodiment, a rearrange server can rearrange the received e-mail in the priority order the user determined.

In Fig. 4A, for example, a receive mail box 20a is shown, the received e-mail is displayed in order of the latest arrival time as a general rule. However, the order of the e-mail within the receive mail box of the provider is rearranged pursuant to the priority order of the previously registered e-mail senders and the like, as shown by numeral 20b, and the received e-mail can be displayed in the rearranged order.

Further, in Fig. 4B, when e-mail is received, as shown by numeral 21a, the order of the e-mail is rearranged by giving the priority order to the e-mail using keywords "contract" and "order" in consideration of its use in a business department, as shown by numeral 21b, so that the e-mail of a signed contract, received at a later time may be displayed before the e-mail concerning a receive estimate, received at an earlier time. In this way, in this embodiment, the rearrangement of the received e-mail in compliance with the priority order can be carried out in the provider, and the e-mail receiver can display the e-mail in order of his own priority without being aware of the rearrangement of the e-mail.

Accordingly, the e-mail receiver can write answer e-mail in the priority order determined by himself and can display in the same priority order using a plurality of PCs in his office and his home in addition to the portable telephone (PHS). The rearrangement of the e-mail according to the priority order in the provider is usually applied to only the e-mail unreceived to the e-mail receiver, but the received e-mail can be included to the e-mail to be rearranged. That is, e-mail which is sent to provider by e-mail sender and is preserved in provider yet can be rearranged, in particular, rearrangement of e-mail may be applied to rearrange only a non-sending e-mail from provider to e-mail receiver(s).

### Third embodiment

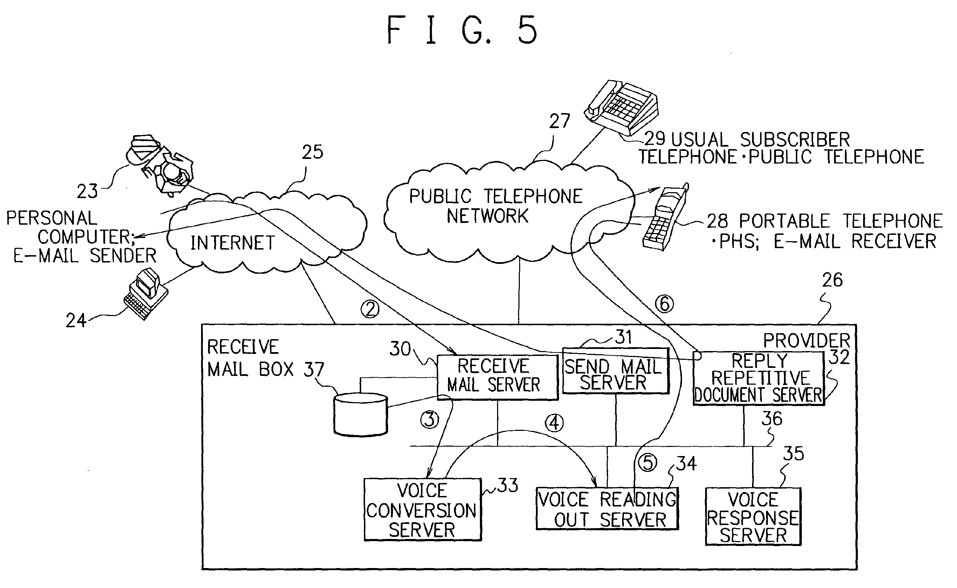

There is shown in Fig. 5 an e-mail processing system according to a third embodiment of the present invention. In this embodiment, as shown in Fig. 5, in an e-mail processing system, desktop personal computers (PCs) 23 and 24 as e-mail senders and a provider 26 as an Internet service provider are connected to Internet 25, and a portable telephone (PHS) 28 as an e-mail receiver and a usual subscriber telephone or a public telephone 29 as an e-mail receiver are connected to the provider 26 via a public telephone network 27.

In the provider 26, a receive mail server 30, a send mail server 31, a reply repetitive documents server 32, a voice conversion server 33, a voice reading out server 34 and a voice response server 35 are connected to the Internet 25 and the public telephone network 27 via a LAN 36. The receive mail server 30 is linked to a receive mail box 37.

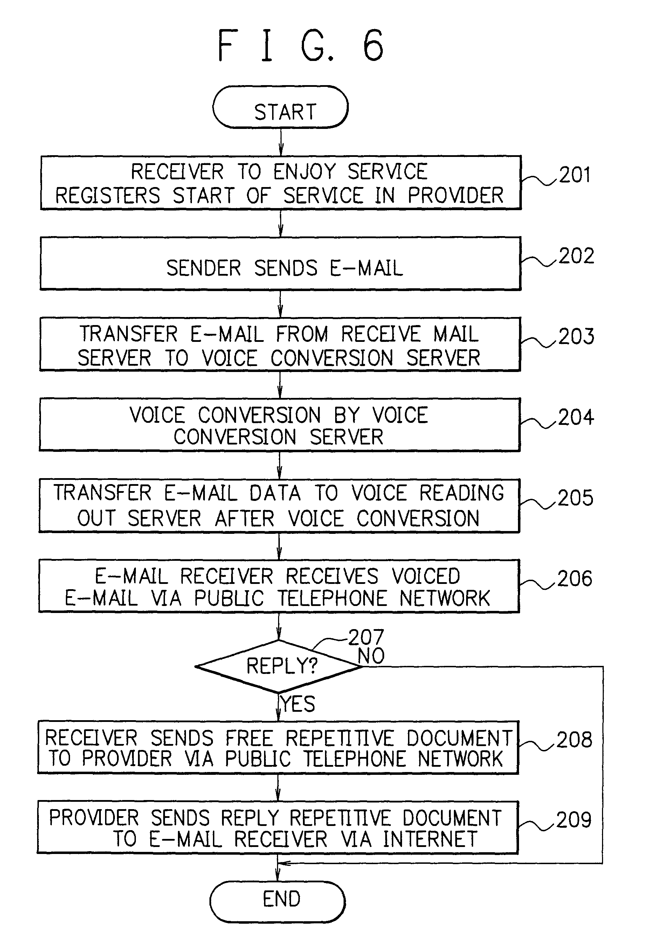

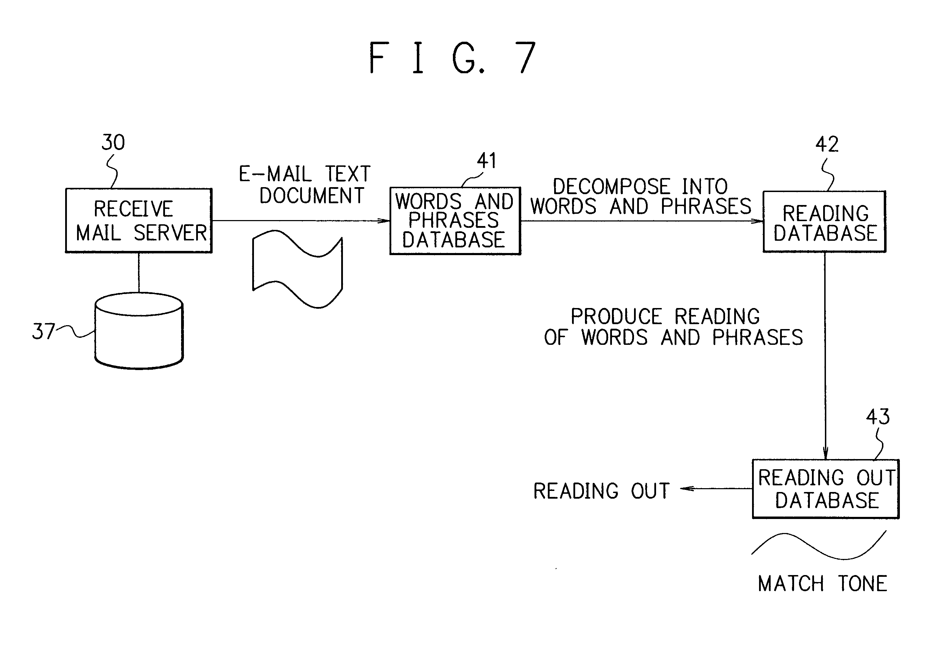

An operation of the e-mail processing system shown in Fig. 5 will be described with reference to Fig. 6 and Fig. 7. Fig. 6 is a flow chart showing an operation of the e-mail processing system described above. First, an e-mail receiver to enjoy service of the e-mail processing system previously registers a start of the service in the provider 26 in step 201. This register can be carried out on a Web by making access to the Internet 25 from the PC 23 or 24 or from the portable telephone (PHS) 28 or the subscriber telephone or the public telephone 29.

Then, an e-mail sender gets access to the provider 26 via the Internet 25 using the PC 23 or 24 and, as shown by ② in Fig. 5, sends e-mail to the intended recipient address in a conventional manner in step 202. In the provider 26, the sent e-mail is received by the receive mail server 30 and is once stored in the receive mail box 37. When this e-mail recipient or receiver is registered in the provider 26 as an eligible receiver to enjoy the service of the e-mail processing system, the e-mail is read out of the receive mail box 37 and, as shown by ③in Fig. 5, is transferred to the voice conversion server 33 in step 203.

A voice conversion of the e-mail is carried out in the voice conversion server 33 in step 204, and the mail data obtained after the voice conversion is, as shown by ④in Fig. 5, transferred to the voice reading out server 34 in step 205. The voice conversion in the voice conversion server 33 and the voice reading out in the voice reading out server 34 are already known and thus the detailed description of their technical operations can be omitted, but they will be described conceptually in connection with Fig. 7 which shows an operation of a voice conversion in the voice conversion server 33 and a voice reading out in the voice reading out server 34. In Fig. 7, the e-mail text document of the receive e-mail server 30 is decomposed into words and phrases in a words and phrases database 41, and a reading of the obtained words and phrases is produced in a reading database 42 of the voice conversion server 33. Then, a tone of the voice of the read e-mail text document is matched, that is, intonation is given to the voice in a reading out database of the voice reading out server 34. In this way, the e-mail text document is converted into the voice signals by the voice conversion server 33 and the voice reading out server 34.

As shown in Figs. 5 and 6, the e-mail receiver who has registered the service start in the provider 26 makes access to the provider 26 via the public telephone network 27 by calling to a previously registered telephone number using the portable telephone (PHS) 28 or the usual subscriber telephone or the public telephone 29 and makes a request to the provider 26 for obtaining the e-mail directed to his own address by inputting his ID (identification) and a password to the provider 26. The provider 26 sends the voice signals which are produced by converting the e-mail text document addressed to the e-mail receiver as described above, as shown by ⑤in Fig. 5, from the voice reading out server 34 to the e-mail receiver via the public telephone network 27 in step 206.

In this manner, the e-mail receiver can listen to the voiced e-mail. After listening to the voiced e-mail, the e-mail receiver determines whether or not to reply to the e-mail in step 207. When replying to the e-mail in step 207, the e-mail receiver selects a free repetitive document previously registered in the provider 26 by the e-mail receiver by means of a key input or the like of the portable telephone (PHS) 28 or the usual subscriber telephone or the public telephone 29 in step 208.

This reply information of the e-mail receiver is sent to the provider 26 via the public telephone network 27, and the provider 26 selects a registered free repetitive document text from the reply repetitive documents server 32 and, as shown by ⑥ in Fig. 5, sends back the reply repetitive document to the e-mail receiver via the Internet 25 in step 209. As to the free repetitive documents to reply, "I understand.", "I understand your message and send my answer later.", "I will review." and so on can be selected.

When the e-mail is sent to the provider 26 from the portable telephone (PHS) 28 or the usual subscriber telephone or the public telephone 29 via the public telephone network 27, the provider 26 creates a text of a destination and so on from the voice signals and the content of the communication matter (mail content) can be attached by a reproducible file form such as "*.wav" or the like of the PC windows or the Macintosh or can be created in a text form from the voice. The reproduced e-mail is sent from the provider 26 to the PCs 23 and 24 via the Internet 25.

In this embodiment, as described above, the e-mail receiver can listen to the content of the e-mail as the voice e-mail using the portable telephone (PHS) 28 or the usual subscriber telephone or the public telephone 29 without employing the PC or the PDA having the communication device, and hence the e-mail receiver can readily receive the e-mail in his destination and can further reply to the e-mail by the free repetitive document. Furthermore, the e-mail can be sent from the portable telephone (PHS) 28 or the usual subscriber telephone or the public telephone 29.

### Fourth embodiment

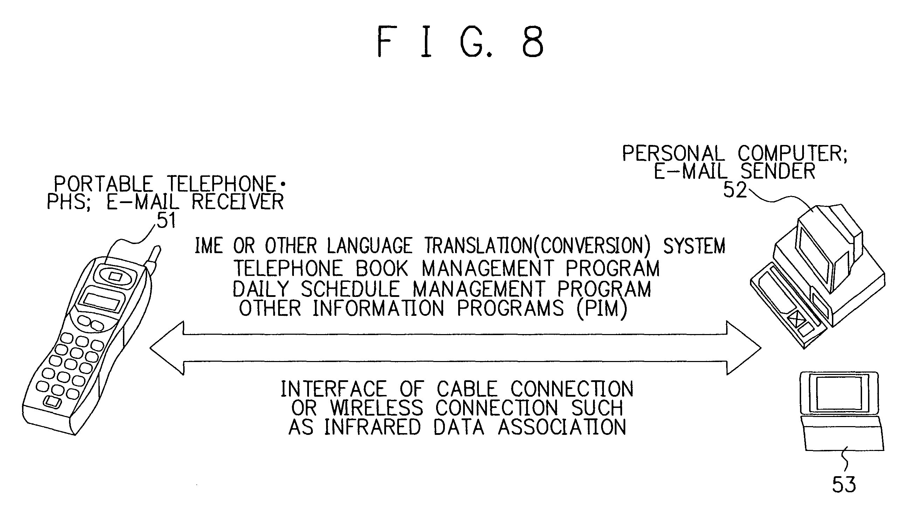

There is shown in Fig. 8 an e-mail processing system according to a fourth embodiment of the present invention. In this embodiment, as shown in Fig. 8, in an e-mail processing system, between a portable telephone (PHS) 51 and desktop personal computers (PCs) 52 and 53, a Japanese kana-kanji conversion processor such as an input method editor (IME) or input method editor for foreign language(s) or Japanese input front end processor for use in composing e-mail and other programs such as a telephone book management program, a daily schedule management program, a personal information management (PIM) program and other information programs are shared. This embodiment can be combined with the three above-described embodiments.

For example, there are a plurality of system programs and their subsets of IME, input method editor for language(s) or the Japanese kana-kanji conversion processor (IME) used for composing the e-mail in the PCs 52 and 53, and the user can select its proper system program for his choice. By using an interface of a cable connection or a wireless connection such as an IrDA (Infrared Data Association), the e-mail is communicated between the PC 52 or 53 and the portable telephone (PHS) 51, and the user's favorite IME (and for example, Japanese kana-kanji conversion processor) can be shared between the PC 52 or 53 and the portable telephone (PHS) 51. In addition, instead of the Japanese kana-kanji conversion processor (IME), a Japanese language dictionary can be shared in the same manner as described above.

In this way, the user having both the PC 52 or 53 and the portable telephone (PHS) 51 can compose the e-mail using the portable telephone (PHS) 51 without feeling any disorder at all in the same operation as composing the e-mail using the PC 52 or 53.

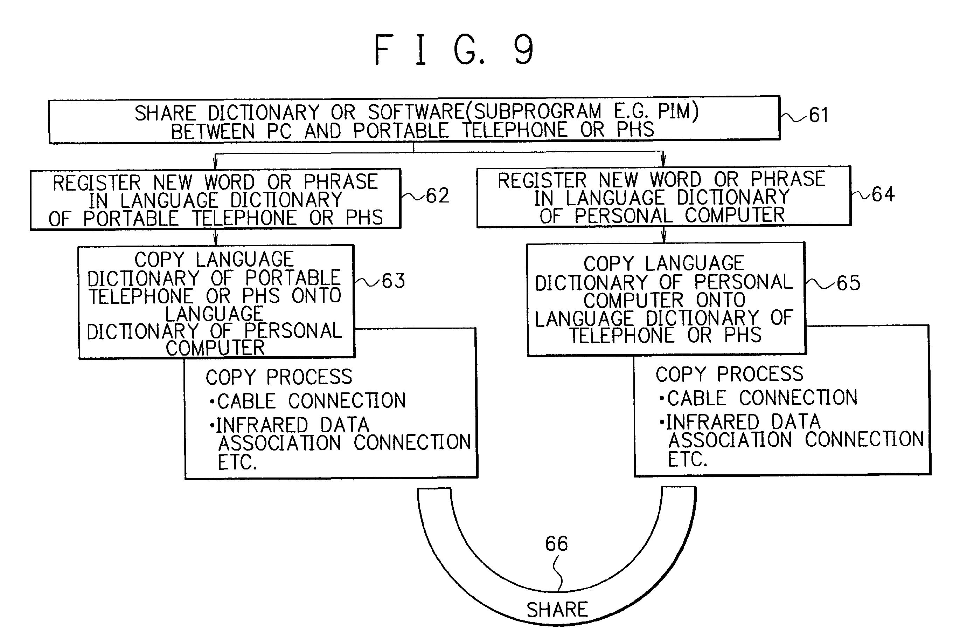

In this case, it is preferable that the words and phrases registered in the Japanese language dictionary may be the same in both the PC 52 or 53 and the portable telephone (PHS) 51 in the same manner as sharing of the aforementioned Japanese kana-kanji conversion processor (IME). This sharing operation will be described with reference to Fig. 9. In the case of sharing of the Japanese kana-kanji conversion processor (IME) or the Japanese language dictionary between the PC 52 or 53 and the portable telephone (PHS) 51 in step 61, when a new word or phrase is registered in the Japanese language dictionary of the portable telephone (PHS) 51 in step 62, then the Japanese language dictionary of the portable telephone (PHS) 51 is copied onto the Japanese language dictionary of the PC 52 or 53 in step 63.

Similarly, when a new word or phrase is registered in the Japanese language dictionary of the PC 52 or 53 in step 64, then the Japanese language dictionary of the PC 52 or 53 is copied onto the Japanese language dictionary of the portable telephone (PHS) 51 in step 65. At this time, the copying is carried out in the same manner as step 63.

Further, the telephone book management program, the daily schedule management program, the PIM program and other information programs, regardless of the e-mail, can be also shared between the portable telephone (PHS) 51 and the PC 52 or 53 in the same manner as described above.

Although the present invention has been described with reference to the above-described embodiments, however, the present invention is not restricted to this and any combination of the first to fourth embodiments is possible.

For example, in the combination of the first and the second embodiments, in the provider 4 connected to the Internet 3, besides the receive mail server 7, the send mail server 8 and the keyword analysis server 9, a rearrange server is further linked to the LAN 10. Further, the receive mail server 7 is coupled with the receive mail box 11, and the keyword analysis server 9 is linked to the keyword database 12 and the key-worded receive mail box 13. The rearrange server rearranges the received e-mail stored in the receive mail box 11 in the priority order the user set and then stored again the rearranged received e-mail in the receive mail box 11. In this embodiment, the e-mail whose text is compressed by the keyword analysis can be displayed in the predetermined priority order.

In the combination of the first and the third embodiments, as shown in Fig. 5, in the provider 26, in addition to the receive mail server 30, the send mail server 31, the reply repetitive documents server 32, the voice conversion server 33, the voice reading out server 34 and the voice response server 35, the keyword analysis server 9 shown in Fig. 1 is further connected to the LAN 36, and the keyword analysis server 9 is coupled with the keyword database 12 and the key-worded receive mail box 13. In this embodiment, not the received e-mail of the receive mail box 37 but the key-worded received e-mail of the key-worded receive mail box 13 can be input to the voice conversion server 33 and be voiced.

In this embodiment, as described above, the e-mail receiver can listen to the short text of the e-mail obtained by the keyword analysis as the voiced e-mail and thus can immediately understand the content of the e-mail employing the telephone such as the portable telephone (PHS) without using the personal computer and the PDA having the communication device.

In the combination selected any of the first to the fourth embodiments, the e-mail receiver can listen to the short text of the e-mail obtained by the keyword analysis as the voiced e-mail in the predetermined priority order.

Further, in the combination selected any of the first to fourth embodiments, the e-mail receiver can listen to the received e-mail as the voiced e-mail in the predetermined priority order.

As described above, according to the present invention, in an e-mail processing system, a provider does not send a received e-mail as it is to an e-mail receiver. In the provider, the content of the received e-mail is compressed by a keyword analysis to obtain a short text of the e-mail, and the short text of the e-mail is sent from the provider to the e-mail receiver via the Internet. The e-mail receiver receives and displays the short text of the received e-mail and thus can immediately understand the content of the received e-mail. Further the short text of the e-mail can be entirely displayed on a small screen of a portable telephone (PHS) or a PDA without scrolling the displayed e-mail.

In an e-mail processing system of the present invention, the provider rearranges the received e-mail in the priority order that the e-mail receiver has previously determined, and then sends the rearranged e-mail to the e-mail receiver via the Internet. Hence, when receiving a lot of e-mail, the e-mail receiver can read the e-mail in order of his own priority and can receive in his optimum order with ease of use. Further, the e-mail requiring an urgent action can be preferentially displayed. Furthermore, when the e-mail receiver uses both the personal computer and the portable information processing terminal such as the portable telephone (PHS), movable phone or the PDA, the received e-mail can be displayed in the same priority order.

In an e-mail processing system of the present invention, the provider receives the e-mail sent from the PC via the Internet, converts the e-mail text document into voice signals as voiced e-mail and sends the voiced e-mail to the e-mail receiver via the public telephone network. The e-mail receiver can listen to the voiced e-mail using the telephone such as the portable telephone (PHS) without using the PC or the PDA having the communication device and hence understands the content of the e-mail. Further, the e-mail can be sent by voice and the e-mail text document can be sent to the e-mail receiver via the internet. Hence, the e-mail can be readily sent and received in a destination using the portable telephone or the PHS which is convenient for carrying about, or the usual subscriber telephone or the public telephone.

Further, in an e-mail processing system of the present invention, the e-mail can be composed in the same operation without feeling any disorder at all using either the personal computer or the portable information processing terminal such as the portable telephone of the PHS, and the user can use his favorite Japanese kana-kanji conversion processor or input method editor which is shared between the personal computer and the above portable telephone (PHS) or the PDA and so on having the communication device to improve ease of use. Any language dictionary or subprogram can be also shared as an ATOK or any similar language translation/conversion system or subprograms for inputting any character, any simple draw or cipher and so on. A Japanese language dictionary can be also shared in the same manner as the Japanese kana-kanji conversion processor or the input method editor. Furthermore, the telephone book management program, the daily schedule management program, the PIM program and other system programs, regardless of the e-mail, can be also shared between the portable telephone (PHS) and the personal computer.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. An electronic mail processing system comprising:
first sending means for sending electronic mail to a receiver via internet;
analysis means for receiving the electronic mail sent from the first sending means via the internet and for carrying out a keyword analysis of the received electronic mail on the basis of keywords previously registered by the receiver to obtain a short text of the electronic mail;
storing means for storing the short text of the electronic mail obtained after the keyword analysis; and
second sending means for sending the short text of the electronic mail stored in the storing means to the receiver via the internet in response to access of the receiver.

2. An electronic mail processing system of claim 1, further comprising:
rearrange means for receiving the electronic mail sent from the first sending means via the internet and for rearranging the received electronic mail in a priority order previously registered by the receiver; and
second storing means for storing the received electronic mail rearranged by the rearrange means,
wherein the analysis means carries out the keyword analysis of the received electronic mail stored in the second storing means on the basis of the keywords previously registered by the receiver to obtain the short text of the electronic mail.

3. An electronic mail processing system comprising:
a first sending means for sending electronic mail to a receiver via internet;
an analysis means for receiving the electronic mail sent from the first sending means via the internet and for carrying out a keyword analysis of the received electronic mail on the basis of keywords previously registered by the receiver to obtain a short text of the electronic mail;
a storing means for storing the short text of the electronic mail obtained after the keyword analysis; and
a second sending means for sending the short text of the electronic mail stored in the storing means to the receiver via the internet in response to access of the receiver;
the keywords are individual keywords including dates, place names, proper names and individually set particular terms, and group keywords including an occupation, an occupational type and an age group of an electronic mail sender and receiver.

4. An electronic mail processing system of claim 3, further comprising:
rearrange means for receiving the electronic mail sent from the first sending means via the internet and for rearranging the received electronic mail in a priority order previously registered by the receiver; and
second storing means for storing the received electronic mail rearranged by the rearrange means,
wherein the analysis means carries out the keyword analysis of the received electronic mail stored in the second storing means on the basis of the keywords previously registered by the receiver to obtain the short text of the electronic mail.

5. An electronic mail processing system comprising:
first sending means for sending electronic mail to a receiver via internet;
rearrange means for receiving the electronic mail sent from the first sending means via the internet and for rearranging the received electronic mail in a priority order previously registered by the receiver;
storing means for storing the received electronic mail rearranged by the rearrange means; and
second sending means for consecutively sending the received electronic mail stored in the storing means in the stored order to the receiver via the internet in response to access of the receiver.

6. An electronic mail processing system comprising:
first sending means for sending electronic mail to a receiver via internet;
voice conversion means for receiving the electronic mail sent from the first sending means via the internet and for converting content of the received electronic mail into voice signals;
reading out means for reading out the voice signals output from the voice conversion means to produce voiced electronic mail; and
second sending means for sending the voiced electronic mail produced by the reading out means to the receiver via a public telephone network in response to access of the receiver.

7. An electronic mail processing system of claim 6, further comprising:
document output means for selecting one of reply repetitive documents previously registered by the receiver and outputting the selected reply repetitive document in response to a signal sent from the receiver via the public telephone network; and
reply sending means for preparing electronic mail from the reply repetitive document output from the document output means and for sending the prepared electronic mail to the electronic mail sender via the internet.

8. An electronic mail processing system of claim 6, further comprising:
rearrange means for receiving the electronic mail sent from the first sending means via the internet and for rearranging the received electronic mail in a priority order previously registered by the receiver; and
storing means for storing the received electronic mail rearranged by the rearrange means,
wherein the voice conversion means converts the content of the received electronic mail stored in the storing means into the voice signals.

9. An electronic mail processing system of claim 6, further comprising:
rearrange means for receiving the electronic mail sent from the first sending means via the internet and for rearranging the received electronic mail in a priority order previously registered by the receiver;
first storing means for storing the received electronic mail rearranged by the rearrange means;
analysis means for carrying out a keyword analysis of the received electronic mail stored in the first storing means on the basis of keywords previously registered by the receiver to obtain a short text of the electronic mail; and
second storing means for storing the short text of the electronic mail obtained after the keyword analysis,
wherein the voice conversion means converts the content of the received electronic mail stored in the second storing means into the voice signals.

10. An electronic mail processing system comprising:
first sending means for sending voiced electronic mail to a receiver via a public telephone network;
conversion means for receiving the voiced electronic mail sent from the first sending means via the public telephone network and for converting content of the voiced electronic mail into a text as content of a communication matter;
storing means for storing the voiced electronic mail of a destination text converted by the conversion means; and
second sending means for sending the received electronic mail stored in the storing means to the receiver via the internet in response to access of the receiver of the voiced electronic mail.

11. An electronic mail processing method, wherein a provider stores electronic mail sent to a receiver via internet in a receive mail box and sends the electronic mail stored in the receive mail box to the receiver via the internet in response to access made by the receiver via the internet, comprising the steps of:
first step for carrying out a keyword analysis of the received electronic mail on the basis of keywords previously registered by the receiver to obtain a short text of the electronic mail;
second step for storing the short text of the electronic mail after the keyword analysis in the receive mail box; and
third step for sending the short text of the electronic mail stored in the receive mail box to the receiver via the internet in response to access of the receiver.

12. An electronic mail processing method, wherein a provider stores electronic mail sent to a receiver via internet in a receive mail box and sends the electronic mail stored in the receive mail box to the receiver via the internet in response to access made by the receiver via the internet, comprising the steps of:
first step for rearranging the received electronic mail in a priority order previously registered by the receiver;
second step for storing the received electronic mail rearranged in the first step in the receive mail box; and
third step for consecutively sending the received electronic mail stored in the receive mail box in the stored order to the receiver via the internet in response to access of the receiver.

13. An electronic mail processing method of claim 12, further comprising:
fourth step for carrying out a keyword analysis of the rearranged electronic mail stored in the receive mail box on the basis of keywords previously registered by the receiver to obtain a short text of the electronic mail; and
fifth step for storing the short text of the electronic mail after the keyword analysis in the receive mail box, the fourth and the fifth steps being carried out before the third step.

14. An electronic mail processing method, wherein a provider stores electronic mail sent to a receiver via internet in a receive mail box and sends the electronic mail stored in the receive mail box to the receiver via the internet in response to access made by the receiver via the internet, comprising the steps of:
first step for converting content of the received electronic mail into voice signals;
second step for reading out the voice signals converted in the first step to produce voiced electronic mail; and
third step for sending the voiced electronic mail produced in the second step to the receiver via a public telephone network in response to access of the receiver.

15. An electronic mail processing method of claim 14, wherein the electronic mail to be converted into the voice signals in the first step is the short text of the received electronic mail obtained by carrying out a keyword analysis of the electronic mail on the basis of keywords previously registered by the receiver.

16. An electronic mail processing method of claim 14, wherein the electronic mail to be converted into the voice signals in the first step is the short text of the received electronic mail obtained by carrying out a keyword analysis of the electronic mail on the basis of keywords previously registered by the receiver and by rearranging the received electronic mail in a priority order previously registered by the receiver.

17. An electronic mail processing device comprising:
receive means for receiving electronic mail sent to a receiver via internet and for storing the received electronic mail in a receive mail box;
analysis means for reading the electronic mail out of the receive mail box and for carrying out a keyword analysis of the readout electronic mail on the basis of keywords previously registered by the receiver to obtain a short text of the electronic mail;
a key-worded receive mail box for storing the short text of the electronic mail obtained by the keyword analysis; and
sending means for sending the short text of the electronic mail stored in the key-worded receive mail box to the receiver via the internet in response to access of the receiver.

18. An electronic mail processing device comprising:
receive means for receiving electronic mail sent to a receiver via internet and for storing the received electronic mail in a receive mail box;
rearrange means for reading the electronic mail out of the receive mail box, for rearranging the electronic mail in a priority order previously registered by the receiver and for storing again the electronic mail rearranged by the rearrange means in the receive mail box; and
sending means for consecutively sending the rearranged electronic mail stored in the receive mail box in the stored order to the receiver via the internet in response to access of the receiver.

19. An electronic mail processing device comprising:
receive means for receiving electronic mail sent to a receiver via internet and for storing the received electronic mail in a receive mail box;
mail conversion means for reading the electronic mail out of the receive mail box, for converting content of the received electronic mail into voice signals and for reading out the voice signals to produce voiced electronic mail; and
sending means for sending the voiced electronic mail produced by mail conversion means to the receiver via a public telephone network in response to access of the receiver.

20. An electronic mail processing system of claim 1, wherein at least one of a Japanese kana-kanji conversion processor and a language dictionary for use in at least composing electronic mail is shared between a personal computer and a portable information processing terminal, and at least one of the personal computer and the portable information processing terminal is used as the electronic mail sending means for sending the electronic mail via a wireless connection interface.

21. An electronic mail processing system of claim 2, wherein at least one of a Japanese kana-kanji conversion process and language dictionary for use in at least composing electronic mail is shared between a personal computer and a portable information processing terminal, and at least one of the personal computer and the portable information processing terminal is used as the electronic mail sending means for sending the electronic mail via a wireless connection interface.

22. An electronic mail processing system of claim 3, wherein at least one of a Japanese kana-kanji conversion processor and a language dictionary for use in at least composing electronic mail is shared between a personal computer and a portable information processing terminal, and at least one of the personal computer and the portable information processing terminal is used as the electronic mail sending means for sending the electronic mail via a wireless connection interface.

23. An electronic mail processing system of claim 4, wherein at least one of a Japanese kana-kanji conversion processor and a language dictionary for use in at least composing electronic mail is shared between a personal computer and a portable information processing terminal, and at least one of the personal computer and the portable information processing terminal is used as the electronic mail sending means for sending the electronic mail via a wireless connection interface.

24. An electronic mail processing system of claim 5, wherein at least one of a Japanese kana-kanji conversion processor and a language dictionary for use in at least composing electronic mail is shared between a personal computer and a portable information processing terminal, and at least one of the personal computer and the portable information processing terminal is used as the electronic mail sending means for sending the electronic mail via a wireless connection interface.

25. An electronic mail processing system of claim 6, wherein at least one of a Japanese kana-kanji conversion processor and a language dictionary for use in at least composing electronic mail is shared between a personal computer and a portable information processing terminal, and at least one of the personal computer and the portable information processing terminal is used as the electronic mail sending means for sending the electronic mail via a wireless connection interface.

26. An electronic mail processing system of claim 7, wherein at least one of a Japanese kana-kanji conversion processor and a language dictionary for use in at least composing electronic mail is shared between a personal computer and a portable information processing terminal, and at least one of the personal computer and the portable information processing terminal is used as the electronic mail sending means for sending the electronic mail via a wireless connection interface.

27. An electronic mail processing system of claim 8, wherein at least one of a Japanese kana-kanji conversion processor and a language dictionary for use in at least composing electronic mail is shared between a personal computer and a portable information processing terminal, and at least one of the personal computer and the portable information processing terminal is used as the electronic mail sending means for sending the electronic mail via a wireless connection interface.

28. An electronic mail processing system of claim 9, wherein at least one of a Japanese kana-kanji conversion processor and a language dictionary for use in at least composing electronic mail is shared between a personal computer and a portable information processing terminal, and at least one of the personal computer and the portable information processing terminal is used as the electronic mail sending means for sending the electronic mail via a wireless connection interface.

29. An electronic mail processing system of claim 10, wherein at least one of a Japanese kana-kanji conversion processor and a language dictionary for use in at least composing electronic mail is shared between a personal computer and a portable information processing terminal, and at least one of the personal computer and the portable information processing terminal is used as the electronic mail sending means for sending the electronic mail via a wireless connection interface.
